# EUROPEAN PATENT APPLICATION

(11) **EP 1 385 084 A1**
(43) Date of publication of application: **28.01.2004**
(21) Application number: 03016797.7
(22) Date of filing: 23.07.2003
(51) Int. Cl.: G06F 7/556

(54) **Logarithmic transformer and method of logarithmic transformation**

(30) Priority: 23.07.2002 JP 2002214046
(71) Applicant: Pioneer Corporation, Meguro-ku, Tokyo (JP)
(72) Inventor: Yamamoto, Yuji,c/o Kawagoe Koujou, Kawagoe-shi, Saitama-ken 350-8555 (JP)
(74) Representative: Popp, Eugen, Dr.

(57) **Abstract**

A logarithmic transformer capable of a reduction in circuit scale. A logarithmic transformation upper bit string generating unit (3) detects a highest order bit of logic "1" out of the bits bₙ₋₁, ..., b₀ of input data B as an active bit. Binary data for indicating the bit position S of the active bit is generated as a logarithmic transformation upper bit string D_{UP} (dₘ₋₁, ..., dₘ₋ₚ). Here, based on the number of bits n of the input data B, the number of bits p of the logarithmic transformation upper bit string D_{UP} (dₘ₋₁, ..., dₘ₋ₚ) is set for the relationship n = 2^{P}. A logarithmic transformation lower bit string generating unit (4) determines a bit string of order lower than the bit position S, having a predetermined number q of bits, out of the bits bₙ₋₁, ..., b₀ of the input data B. The resultant bit string makes a logarithmic transformation lower bit string D_{LOW} (dₘ₋ₚ₋₁, ..., d₀). Then, logarithmic transformation data D having a total number of p + q bits is generated with the logarithmic transformation upper bit string D_{UP} (dₘ₋₁, ..., dₘ₋ₚ) as the integral part of a logarithmic transformation value resulting from the logarithmic transformation of the input data B and the logarithmic transformation lower bit string D_{LOW} (dₘ₋ₚ₋₁, ..., d₀) as the fractional part of the logarithmic transformation value resulting from the logarithmic transformation of the input data B.

## Description

### BACKGROUND OF THE INVENTION

The invention relates to a logarithmic transformer and a method of logarithmic transformation for logarithmically transforming, for example, digital data or the like.

Conventionally, in compressing a large number of bits of digital data into fewer bits of digital data and in improving operation efficiency by replacing a multiplication or division between a plurality of pieces of digital data with an addition or subtraction between pieces of digital data which are logarithmically transformed, logarithmic transformation has widely been used as useful means in the field of digital signal processing.

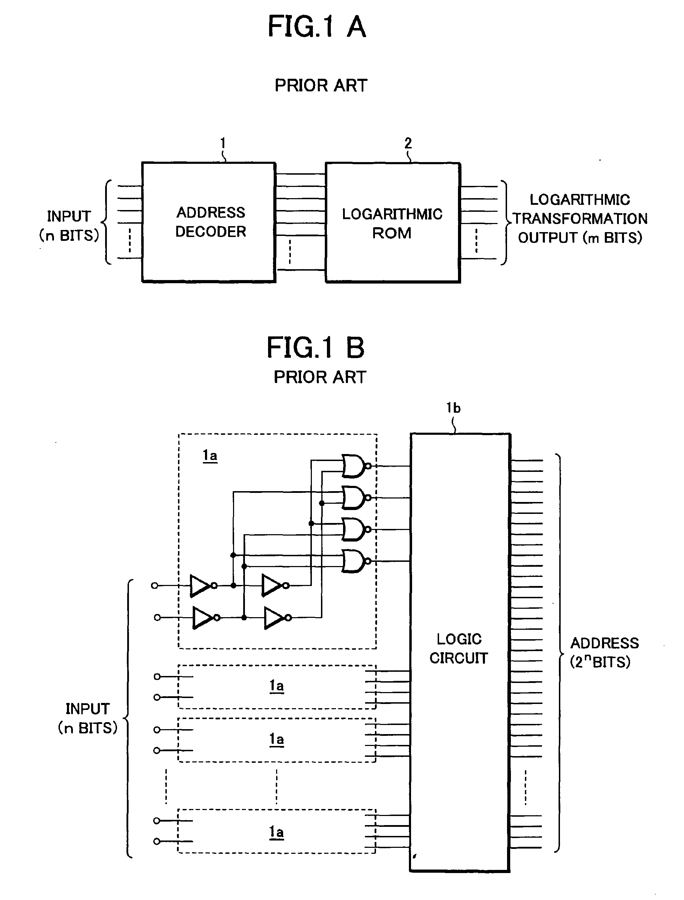

Fig. 1A shows the configuration of a typical logarithmic transformer which has been known heretofore.

This logarithmic transformer is implemented as hardware for the sake of fast logarithmic transformation. As shown in Fig. 1A, the logarithmic transformer includes an address decoder 1 which is a logic circuit and a logarithmic ROM 2 which is made of a read-only semiconductor memory.

The logarithmic ROM 2 is configured as a so-called look-up table, in which a number of pieces of logarithmic transformation data corresponding to digital data to be logarithmically transformed are stored in advance.

When the address decoder 1 receives digital data to be logarithmically transformed, it transforms (decodes) the digital data into address data to designate an address of the logarithmic ROM 2 so that logarithmic transformation data corresponding to the digital data is read out.

That is, the values of digital data to be logarithmically transformed, the address data for designating addresses of the logarithmic ROM 2, and the logarithmic transformation data prestored at the addresses designated by the address data are determined in one-on-one correspondence. Thus, when digital data to be logarithmically transformed is supplied to the address decoder 1, the logarithmic transformation data corresponding to the digital data is output from the logarithmic ROM 2 as a result of logarithmic transformation, thereby allowing fast logarithmic transformation.

The conventional logarithmic transformer, however, has had a problem of being extremely large in circuit scale.

This has been a significant problem to be solved in such cases that the logarithmic transformer is incorporated into an electronic apparatus requiring high density packaging, reduced size and weight, etc., and that the logarithmic transformer is formed as a semiconductor integrated circuit device.

Take a concrete example. The address decoder 1 shown in Fig. 1A is composed of a plurality of stages of logic circuits 1a and 16 as shown in Fig. 1B. Each of the logic circuits 1a and 1b includes a number of logic operation elements (inverters, OR gates, NOR gates, AND gates, NAND gates, etc.) in combination.

Here, the plurality of logic circuits 1a lying in the first stage are made of a plurality of inverters and NOR gates for creating intricate combinations of n-bit (n is an arbitrary natural number) input digital data for logic operation. The logic circuit 1b in the next stage is also made of a plurality of logic operation elements so that a number of pieces of data output from the plurality of logic circuits 1a are intricately combined for logic operation. The logic circuit 1b includes a number of stages of logic circuits, not a single stage alone.

As above, due to such reasons as the necessity to generate address data capable of accessing the entire address space of the logarithmic ROM 2, the address decoder 1 has had a large circuit scale.

The look-up table configuration of the logarithmic ROM 2 has also contributed an increase in circuit scale.

That is, the logarithmic ROM 2 must previously contain at least 2ⁿ values of logarithmic transformation data according to the number of bits n of the digital data to be logarithmically transformed.

In addition, even if the logarithmic transformation data is stored as m bits of data which is smaller than the n-bit digital data, the logarithmic ROM 2 still requires a total memory capacity of at least 2ⁿ × m bits.

Under the circumstances, the logarithmic ROM 2 has required a high memory capacity, contributing to the large circuit scale.

### SUMMARY OF THE INVENTION

The present invention has been achieved in view of the conventional problems illustrated above. It is thus an object of the present invention to provide a logarithmic transformer having a new configuration.

According to a first aspect of the present invention, there is provided a logarithmic transformer comprising: a first bit string generator for generating a first bit string of binary data indicating the position of a highest order bit of logic "1" out of bits of digital data to be logarithmically transformed; and a second bit string generator for determining, from the digital data, a second bit string of order lower than the highest order bit of logic "1", the logarithmic transformer outputting logarithmic transformation data, which includes the first bit string as an integral part of a logarithmic transformation value resulting from a logarithmic transformation of the digital data and the second bit string as a fractional part of the logarithmic transformation value.

According to a second aspect of the present invention, the first bit string generator comprises: a detecting unit for detecting the position of the highest order bit of logic "1" out of the bits of the digital data; and a generating unit for generating the first bit string based on a result of detection by the detecting unit.

According to a third aspect of the present invention, the detecting unit detects the highest order bit of logic "1" by decoding the digital data.

According to a fourth aspect of the present invention, the generating unit contains pieces of binary data indicating the positions of the respective bits of the digital data, and selects one out of the pieces of binary data based on the result of detection by the detecting unit, thereby generating the binary data indicating the position of the highest order bit of logic "1."

According to a fifth aspect of the present invention, the generating unit is composed of a switching circuit for selecting one out of the pieces of binary data, based on the result of detection by the detecting unit.

According to a sixth aspect of the present invention, the detecting unit comprises: a first logic circuit for outputting data for excluding a bit string lower than the highest order bit of logic "1" from the bits of the digital data; and a second logic circuit for removing the bit string excluded by the data from the bits of the digital data, thereby detecting the highest order bit of logic "1."

According to a seventh aspect of the present invention, the first logic circuit includes a plurality of OR gates for inputting respective bits of the digital data from a most significant bit to a least significant bit, the OR gates having their outputs and inputs cascaded in association with the most significant bit to the least significant bit; and the OR gates generate the data for excluding by performing OR operations between the outputs of the OR gates of higher order bits and the respective bits of the digital data.

According to an eighth aspect of the present invention, the second logic circuit detects the highest order bit of logic "1" by performing AND operations between the respective bits of the digital data and the data for excluding.

According to a ninth aspect of the present invention, the second bit string generator determines, as the second bit string, a bit string of a predetermined number of bits including a bit following the highest order bit of logic "1" out of the bits of the digital data.

According to a tenth aspect of the present invention, when the number of bits from the bit following the highest order bit to a least significant bit of the digital data falls short of the predetermined number, the second bit string generator appends as many bits as a shortfall to the least significant bit to generate, as the second bit string, a bit string of the predetermined number of bits.

According to an eleventh aspect of the present invention, the secondbit string generator comprises: a second bit string extracting unit for inputting the digital data as successive bit strings each having the predetermined number of bits; and a second bit string selecting unit for making the second bit string extracting unit to extract, as the second bit string, a bit string of the predetermined number of bits having the bit following the highest order bit of logic "1" as a most significant bit of the bit string of the predetermined number.

According to a twelfth aspect of the present invention, the second bit string selecting unit detects the highest order bit of logic "1" by decoding the digital data.

According to a thirteenth aspect of the present invention, the second bit string extracting unit extracts the bit string of the predetermined number of bits including the bit following the highest order bit as the most significant bit, based on the result of detection decoded by the second bit string selecting unit.

According to a fourteenth aspect of the present invention, the second bit string extracting unit is composed of a switching circuit for extracting the bit string of the predetermined number of bits based on the result of detection by the second bit string selecting unit.

According to a fifteenth aspect of the present invention, there is provided a logarithmic transformation comprising: a first bit string generating step of generating a first bit string of binary data indicating the position of a highest order bit of logic "1" out of bits of digital data to be logarithmically transformed; and a second bit string generating step of determining, from the digital data, a second bit string of order lower than the highest order bit of logic "1". Specifically, logarithmic transformation data on the digital data is generated by using the first bit string as an integral part of a logarithmic transformation value resulting from a logarithmic transformation of the digital data and the second bit string as a fractional part of the logarithmic transformation value.

### RIEF DESCRIPTION OF THE DRAWINGS

These and other objects and advantages of the present invention will become clear from the following description with reference to the accompanying drawings, wherein:
Figs. 1A and 1B are diagrams showing the configuration of a conventional logarithmic transformer;
Fig. 2 is a diagram explaining the configuration and operation of a logarithmic transformer according to an embodiment of the present invention;
Fig. 3 is a diagram further explaining the configuration and operation of the logarithmic transformer according to the embodiment of the present invention;
Fig. 4 is a diagram further explaining the configuration and operation of the logarithmic transformer according to the embodiment of the present invention;
Fig. 5 is a diagram showing the configuration of an electronic apparatus to which the logarithmic transformer of a practical example is applied;
Fig. 6 is a diagram showing the configuration of circuits provided in the logarithmic transformer of this practical example;
Fig. 7 is a diagram further showing the configuration of circuits provided in the logarithmic transformer of this practical example;
Fig. 8 is a chart explaining the operation of the logarithmic transformer in this practical example;
Fig. 9 is a chart further explaining the operation of the logarithmic transformer in this practical example;
Fig. 10 is a chart further explaining the operation of the logarithmic transformer in this practical example;
Fig. 11 is a chart further explaining the operation of the logarithmic transformer in this practical example; and
Fig. 12 is a chart showing the evaluation on the transformation accuracy of the logarithmic transformer in this practical example.

### DETAILED DESCRIPTION OF THE PREFERRED EMBODIMENTS

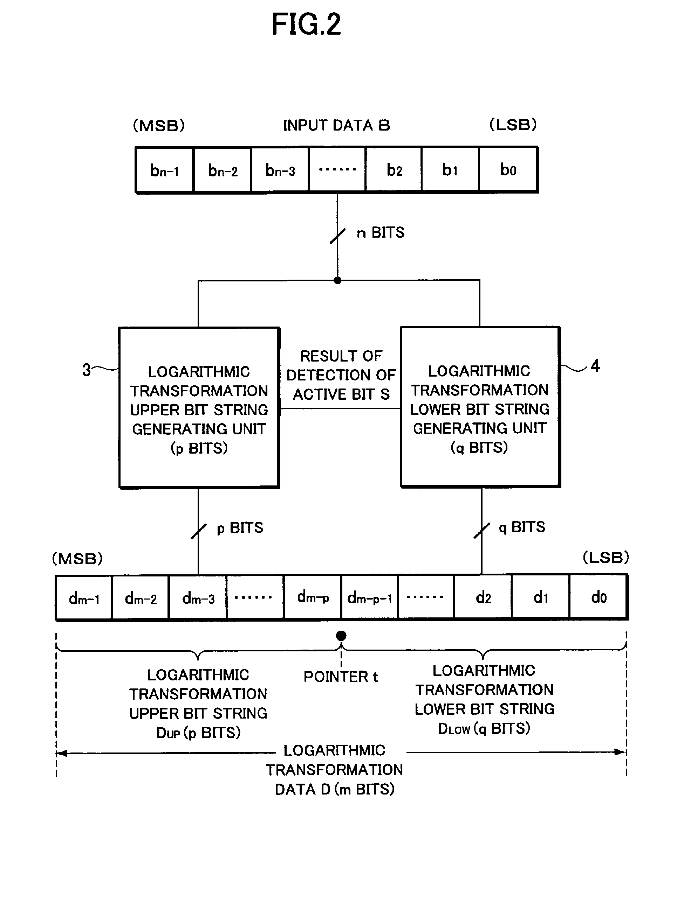

Hereinafter, a preferred embodiment of the present invention will be described with reference to Figs. 2-4.

Figs . 2 to 4 are diagrams showing the configuration and function of a logarithmic transformer according to the present embodiment.

For ease of explanation, digital data B to be logarithmically transformed will be described as n-bit binary data which is generally expressed such as B (bₙ₋₁, bₙ₋₂, bₙ₋₃, ..., b_{2,} b_{1,} b₀) . Similarly, logarithmic transformation data D given a logarithmic transformation shall be m-bit binary data which can be expressed such as D (d_{m-1,} dₘ₋₂, d_{m-3,} ..., d_{m-p,} d_{m-p-1,} ..., d_{2,} d₁, d₀) .

In consideration of the meaning of typical logarithmic transformations, the numbers of bits n and m of the foregoing data B and D will be described, though not necessarily be restrictive, as n ≥ m.

In Fig. 2, this logarithmic transformer applies the processing of logarithmic transformation to the input data B to be logarithmically transformed, and outputs the logarithmic transformation data D which results from the logarithmic transformation.

In order to perform such logarithmic transformation, the logarithmic transformer comprises a logarithmic transformation upper bit string generating unit 3 and a logarithmic transformation lower bit string generating unit 4.

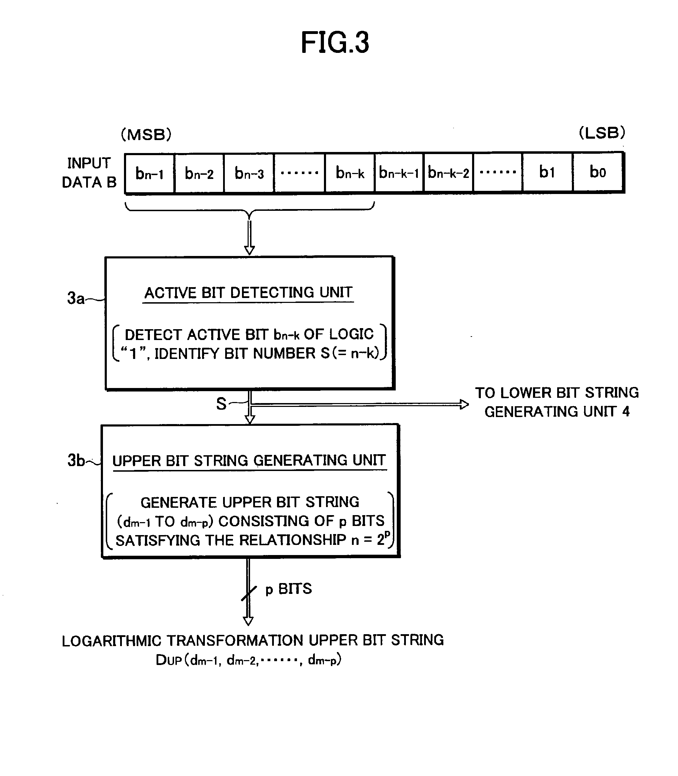

As shown in Fig. 3, the logarithmic transformation upper bit string generating unit 3 comprises an active bit detecting unit 3a and an upper bit string generating unit 3b.

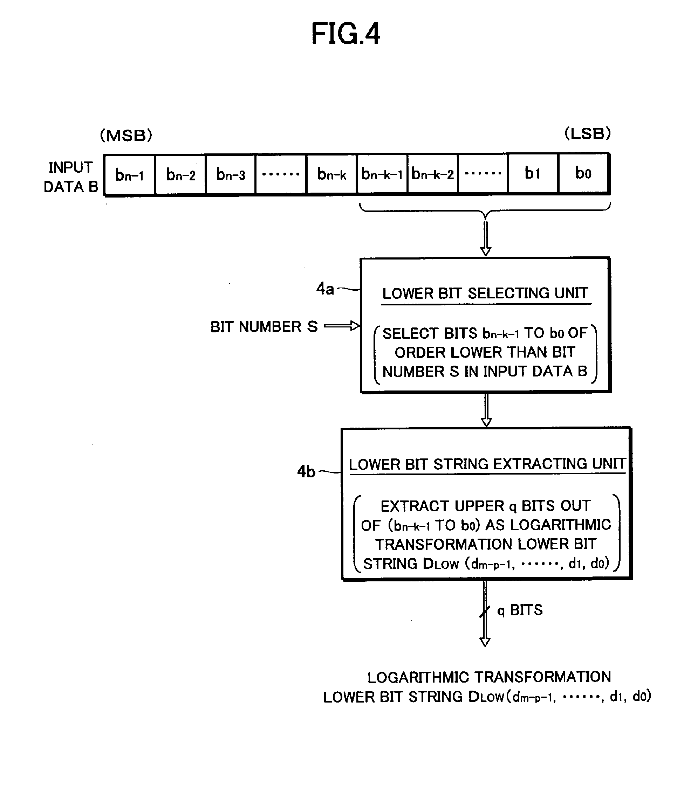

As shown in Fig. 4, the logarithmic transformation lower bit string generating unit 4 comprises a lower bit selecting unit 4a and a lower bit string extracting unit 4b.

Note that the logarithmic transformation upper bit string generating unit 3 and the logarithmic transformation lower bit string generating unit 4, as well as the active bit detecting unit 3a, the upper bit string generating unit 3b, the lower bit selecting unit 4a, and the lower bit string extracting unit 4b, may be formed independently of each other, whereas they may be integrated into one or more circuits.

That is, for the sake of optimum logic design, these components 3, 4, 3a, 3b, 4a, and 4b need not necessarily be configured independently. Instead, they may be integrated into one or more circuits to shrink the circuit scale by sharing logic operation elements, some of the circuitry, etc.

In Figs. 2 and 3, when the logarithmic transformation upper bit string generating unit 3 is supplied with n-bit input data B to be transformed, it detects a highest order bit of logic "1" (hereinafter, referred to as "active bit") out of the bits bₙ₋₁, bₙ₋₂, bₙ₋₃, ..., b₂, b₁, and b₀ of the input data B.

This detecting process is performed by the active bit detecting unit 3a in Fig. 3, whereby the foregoing highest order bit is detected as the active bit. Then, the bit number S for indicating what number of the bit of the input data B the active bit falls on is identified.

For example, when the active bit is the bit bₙ₋ₖ which falls on the kth from the most significant bit (MSB), the bit number S of the bit bₙ₋ₖ is n - k.

In a more specific example, when the input data B is 16-bit (n = 16) data expressed as B (0, 0, 0, 1, 0, 1, 1, 0, 1, 0, 0, 0, 0, 0, 0, 1), the bit bₙ₋ₖ of logic "1" falling on the fourth from the most significant bit (MSB) b₁₅ (i.e., b₁₂) is the active bit. The bit number S is "12."

Note that bits of logic "1" among the bits b₁₁-b₀ of order lower than the bit b₁₂, if any, are not regarded as active bits.

Then, the active bit detecting unit 3a supplies the bit number S to the upper bit string generating unit 3b and the logarithmic transformation lower bit string generating unit 4 as the result of detection of the active bit.

Next, the upper bit string generating unit 3b generates a logarithmic transformation upper bit string D_{UP} (d_{m-1,} dₘ₋₂, dₘ₋₃, ..., dₘ₋ₚ) , or the upper p bits including the most significant bit d_{m-1,} of the m-bit logarithmic transformation data D.

Here, the number of bits p of the logarithmic transformation upper bit string D_{UP} is predetermined in accordance with the input data B of n bits, so as to satisfy the relationship n = 2^{p} (in other words, the relationship p = log₂ n).

Then, when the bit number S is supplied from the active bit detecting unit 3a, binary data equivalent to the bit number S (binary data consisting of p bits) is generated. The p-bit binary data makes the logarithmic transformation upper bit string D_{UP}.

In a more specific example, when the input data B is the foregoing 16-bit data which is expressed as B (0, 0, 0, 1, 0, 1, 1, 0, 1, 0, 0, 0, 0, 0, 0, 1), the bit number S of the active bit is "12." Then, binary data (1, 1, 0, 0) equivalent to the bit number S is generated.

From the relationship n = 2^{p}, the number of bits p of the logarithmic transformation upper bit string D_{UP} corresponding to the 16-bit (n = 16) input data B is "4." Since the binary data equivalent to the foregoing bit number S is (1, 1, 0, 0), the 4-bit logarithmic transformation upper bit string is D_{UP}(1, 1, 0, 0).

Even if the number of bits m of the logarithmic transformation data D to be generated is smaller than the number of bits n of the input data B, the number of bits p of the logarithmic transformation upper bit string D_{UP} is determined from the relationship n = 2^{p}. Then, the logarithmic transformation upper bit string D_{UP} corresponding to the binary data equivalent to the bit number S, or the p-bit logarithmic transformation upper bit string D_{UP}, is generated.

As above, the logarithmic transformation upper bit string generating unit 3 including the active bit detecting unit 3a and the upper bit string generating unit 3b generates the bit number S of the active bit in the form of the logarithmic transformation upper bit string D_{UP}, with the highest order bit as the active bit out of the bits of the input data B which have logic "1."

Next, the logarithmic transformation lower bit string generating unit 4 will be described with reference to Figs. 2 and 4.

When the logarithmic transformation lower bit string generating unit 4 is supplied with n-bit input data B to be transformed, it generates a logarithmic transformation lower bit string D_{LOW}, which represents the lower (m - p) bits of the logarithmic transformation data D, based on the input data B.

In order to generate this logarithmic transformation lower bit string D_{LOW}, there are provided the lower bit selecting unit 4a and the lower bit string extracting unit 4b in Fig. 4.

The lower bit selecting unit 4a selects a bit string (b_{n-k-1,} bₙ₋ₖ₋₂, ..., b₁, b₀) of order lower than the active bit bₙ₋ₖ designated by the foregoing bit number S, out of the bits bₙ₋₁, b_{n-2,} b_{n-3,} ..., b₂, b₁, and b₀ of the input data B, and outputs the result of selection to the lower bit string extracting unit 4b.

In the present embodiment, the lower bit string (bₙ₋ₖ₋₁, b_{n-k-2,} ..., b₁, b₀) is selected based on the bit number S, whereas other methods are also applicable.

In one modified example, the lower bit string (bₙ₋ₖ₋₁, b_{n-k-2,} ..., b₁, b₀) may be selected based on the p-bit logarithmic transformation upper bit string D_{UP} (dₘ₋₁, dₘ₋₂, ..., dₘ₋ₚ) described above. That is, since the logarithmic transformation upper bit string D_{UP} (dₘ₋₁, dₘ₋₂, ..., dₘ₋ₚ) is the binary data of the bit number S, the lower bit string (b_{n-k-1,} bₙ₋ₖ₋₂, ..., b₁, b₀) may be selected based on the logarithmic transformation upper bit string D_{UP} (d_{m-1,} dₘ₋₂, ..., dₘ₋ₚ) instead of the bit number S.

Next, the lower bit string extracting unit 4b extracts upper q bits from the lower bit string (bₙ₋ₖ₋₁, b_{n-k-2, ...,} b_{1,} b₀) , the number of bits q corresponding to a difference (m - p) between the number of bits m of the logarithmic transformation data D to be generated and the number of bits p of the logarithmic transformation upper bit string D_{UP.} The extracted string of q (i.e., m - p) bits (b_{n-k-1,} b_{n-k-2, ...,} b_{n-k-1-q}) makes the logarithmic transformation lower bit string D_{LOW} (d_{m-p-1,} dₘ₋ₚ₋₂, ..., d₁, d₀) of the logarithmic transformation data D.

Incidentally, if the total number of bits of the lower bit string (b_{n-k-1,} b_{n-k-2, ...,} b₁, b₀) is smaller than q (i.e., m - p), as many bits of logic "0" as the shortfall will be appended to the least significant bit (LSB) b₀ so that the logarithmic transformation lower bit string D_{LOW} (dₘ₋ₚ₋₁, d_{m-p-2,}..., d₁, d₀) is generated in q bits.

Then, as shown in Fig. 2, the p-bit logarithmic transformation upper bit string D_{UP} (dₘ₋₁, d_{m-2,} d_{m-3,} ..., dₘ₋ₚ) is output as an integral value resulting from the logarithmic transformation of the input data B. The q-bit logarithmic transformation lower bit string D_{LOW} (dₘ₋ₚ₋₁, ..., d₂, d₁, d₀) is output as a fractional value resulting from the logarithmic transformation of the input data B.

Then, the logarithmic transformation data D having a total of m bits is output with the logarithmic transformation upper bit string D_{UP} and the logarithmic transformation lower bit string D_{LOW} as the upper bit string and the lower bit string of the logarithmic transformation data D, respectively.

In a more specific example, the lower bit string extracting unit 4b performs the following processing. This concrete example will deal with the case where this logarithmic transformer is configured to generate 8-bit (m = 8) logarithmic transformation data D from 16-bit (n = 16) input data B, and the input data B is the foregoing 16-bit data expressed as B (0, 0, 0, 1, 0, 1, 1, 0, 1, 0, 0, 0, 0, 0, 0, 1).

When the input data B (0, 0, 0, 1, 0, 1, 1, 0, 1, 0, 0, 0, 0, 0, 0, 1) is input, the logarithmic transformation upper bit string D_{UP} (dₘ₋₁, dₘ₋₂, ..., dₘ₋ₚ) is D_{UP} (1, 1, 0, 0) as described above since the highest order bit of logic "1" falls on the twelfth bit b₁₂.

Here, the logarithmic transformation upper bit string D_{UP} (1, 1, 0, 0) occupies four bits (p = 4) of the 8-bit (m = 8) logarithmic transformation data D to be generated. The remaining four bits (m - p = 4) are allocated for the logarithmic transformation lower bit string D_{LOW}.

As a candidate for the logarithmic transformation lower bit string D_{LOW}, the bit string (0, 1, 1, 0, 1, 0, 0, 0, 0, 0, 0, 1), or the bit string (b₁₁, b₁₀, b₉, b₈, ..., b₀) of order lower than the foregoing twelfth bit b₁₂, is selected from the input data B (0, 0, 0, 1, 0, 1, 1, 0, 1, 0, 0, 0, 0, 0, 0, 1). Then, the bit string (0, 1, 1, 0) corresponding to the string of upper four bits (b₁₁, b₁₀, b₉, b₈) makes the logarithmic transformation lower bit string D_{LOW} (d₃, d₂, d₁, d₀), i.e., D_{LOW} (0, 1, 1, 0).

The logarithmic transformation upper bit string D_{UP} (1, 1, 0, 0) and the logarithmic transformation lower bit string D_{LOW} (0, 1, 1, 0) are combined into the final logarithmic transformation data D (1, 1, 0, 0, 0, 1, 1, 0).

In Fig. 2, a pointer t attached to the logarithmic transformation data D given the transformation indicates the position of the decimal point. Consequently, in such cases that the logarithmic transformation data D is buffered by a register circuit or the like for parallel output, the physical bit position in the register circuit or the like can be represented by the pointer t to indicate the boundary (the position of the decimal point) between the logarithmic transformation upper bit string D_{UP} and the logarithmic transformation lower bit string D_{LOW}.

Nevertheless, the mode of expression of the boundary (the point of the decimal point) between the logarithmic transformation upper bit string D_{UP} and the logarithmic transformation lower bit string D_{LOW} of the logarithmic transformation data D is not limited to the pointer t.

In one modified example, a single bit may be added to the position of the boundary between the logarithmic transformation upper bit string D_{UP} and the logarithmic transformation lower bit string D_{LOW}. Here, the logarithmic transformation data D has a total of (m + 1) bits with the single additional bit as a bit indicating the position of the decimal point.

In another modified example, a single bit may be added to the position of the boundary between the logarithmic transformation upper bit string D_{UP} and the logarithmic transformation lower bit string D_{LOW} while the least significant bit d₀ of the logarithmic transformation lower bit string D_{LOW} is removed. Here, the logarithmic transformation data D has a total of m bits with the single additional bit as a bit indicating the position of the decimal point.

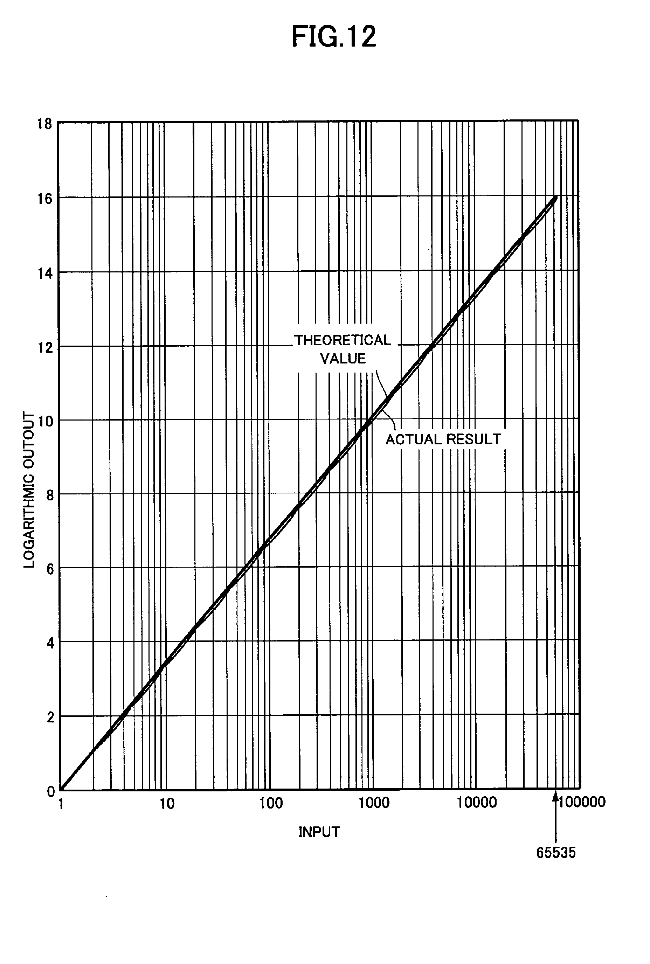

According to the present embodiment, the logarithmic transformation of input data B resulted in logarithmic transformation data D showing values in close agreement with its theoretical values. Incidentally, the accuracy of the logarithmic transformation will be described specifically in conjunction with the following practical example. As shown in the evaluations in Fig. 12, when 16-bit input data B was logarithmically transformed by this logarithmic transformer, the logarithmic transformation data D showed values in close agreement with the theoretical values.

Moreover, the logarithmic transformer of the present embodiment can be made of logic operation elements extremely fewer than with the conventional address decoder 1 shown in Fig. 1. This allows a reduction in circuit scale etc.

For example, the logarithmic transformation upper bit string generating unit 3 can detect and identify the active bit and the bit number S in the input data B by using a small-scale comparator or decoder circuit which is composed of logic operation elements.

In generating the p-bit logarithmic transformation upper bit string Dᵤₚ equivalent to the bit number S, the binary data can be generated from the bit number S by using a small-scale decoder circuit which is composed of logic operation elements.

In addition, the logarithmic transformation lower bit string generating unit 4 can be implemented as a small-scale register circuit or the like since it determines the logarithmic transformation lower bit string D_{LOW} by simply selecting and extracting predetermined bits from the input data B.

The circuit scale can also be reduced due to the absence of the configuration where data corresponding to logarithmic transformation is prestored in a ROM or the like as if in the prior art.

As illustrated above, the logarithmic transformer of the present embodiment has a new configuration which allows a reduction in circuit scale and the like with useful effects in the field of digital signal processing.

### [Example]

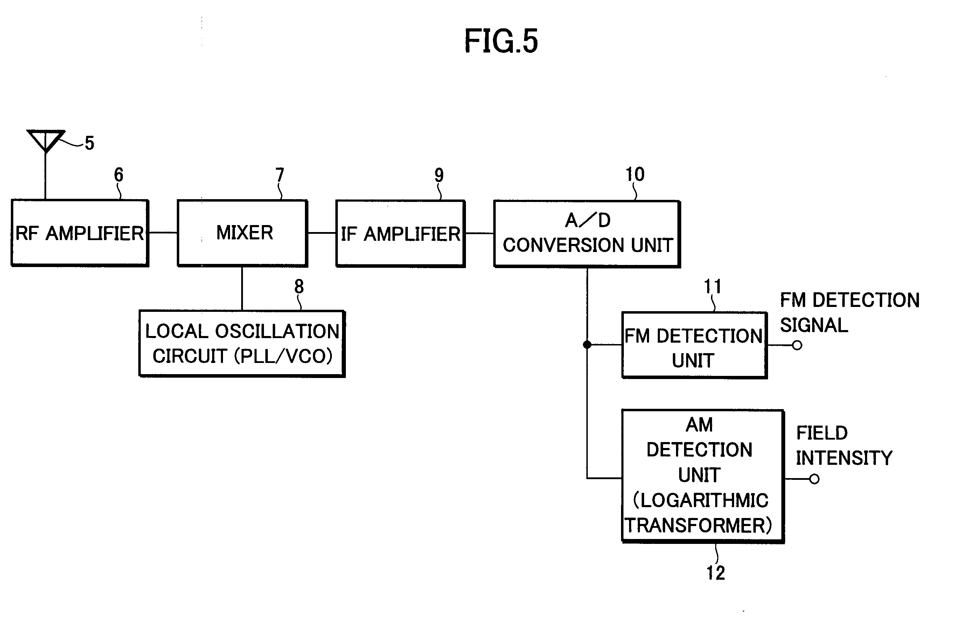

Now, with reference to Figs. 5 to 12, description will be given of a more concrete, practical example of embodiment.

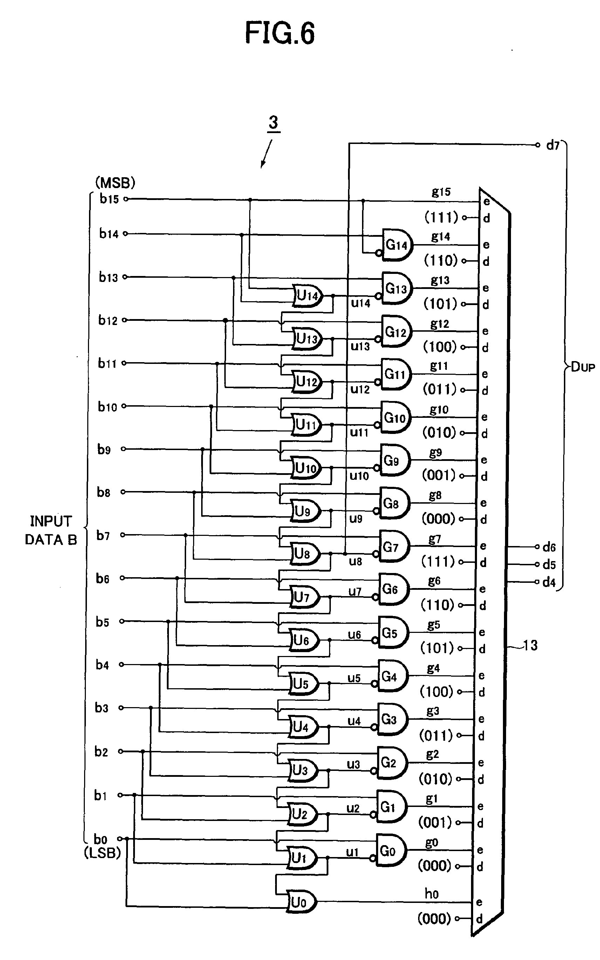

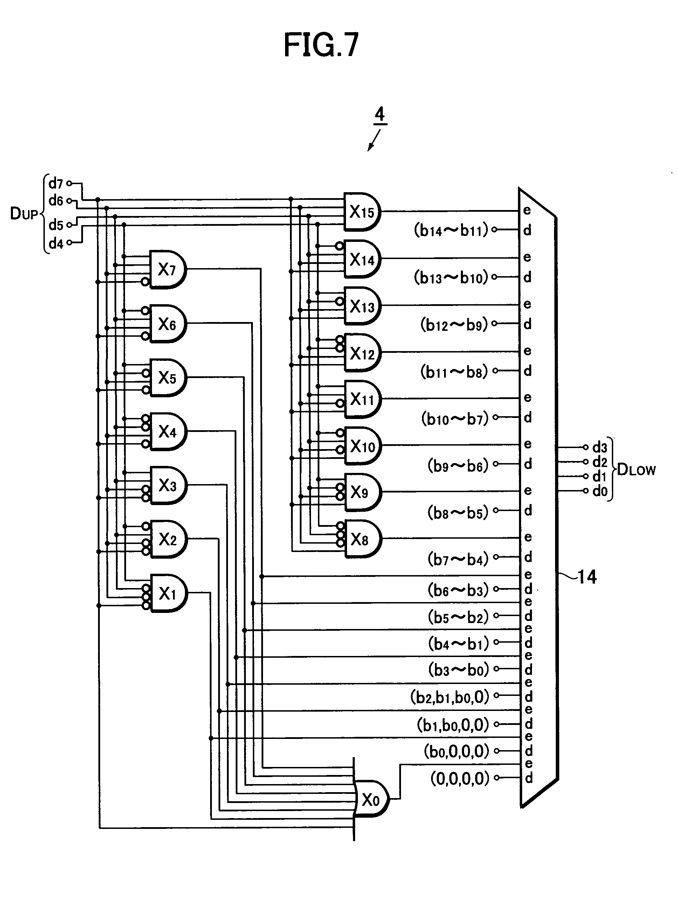

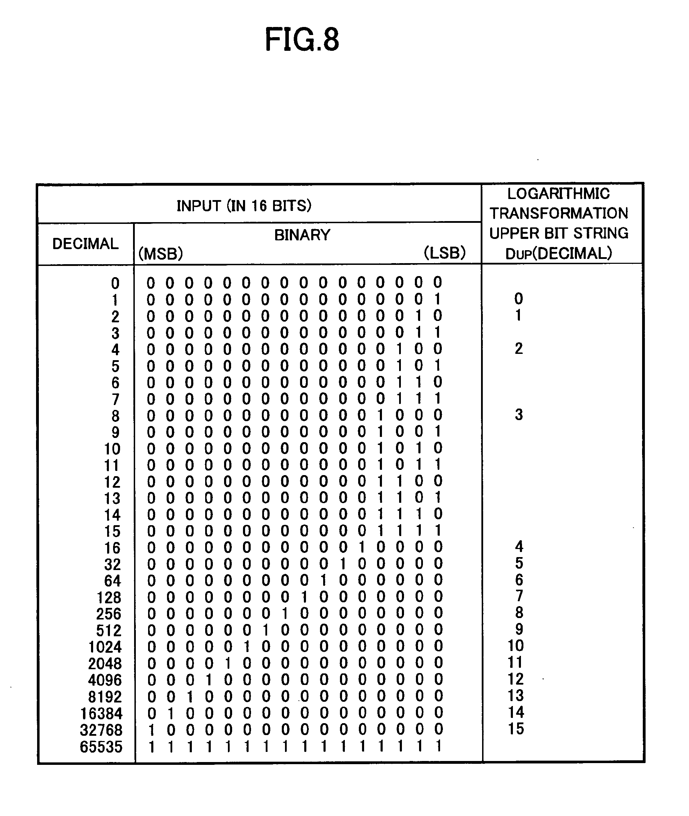

Fig. 5 is a diagram showing the configuration of an FM/AM receiver which utilizes the logarithmic transformer of this practical example. Figs. 6 and 7 are diagrams showing the circuitry of the logarithmic transformer. Figs. 8 to 11 are charts showing the operation and function of the logarithmic transformer. Fig. 12 is a chart showing evaluation of the logarithmic transformer.

In Fig. 5, the FM/AM receiver utilizing the logarithmic transformer of this practical example comprises an RF amplifier 6, a mixer 7, a local oscillation circuit 8, and an IF amplifier 9. The RF amplifier 6 receives arrival waves through an antenna 5. The local oscillation circuit 8 has such circuits as a PLL and a VCO, and generates a local oscillation signal. The mixer 7 mixes the local oscillation signal and the reception signal to generate an intermediate frequency signal (IF signal) and the like. The IF amplifier 9 amplifies the intermediate frequency signal.

The FM/AM receiver further comprises an A/D conversion unit 10, an FM detection unit 11, and an AM detection unit 12. The A/D conversion unit 10 performs analog-to-digital conversion to convert the intermediate frequency signal amplified by the IF amplifier 9 into digital data. The FM detection unit 11 applies predetermined digital signal processing to the digital data to detect an FM detection signal. The AM detection unit 12 applies predetermined digital signal processing to the digital data to detect an AM detection signal.

Here, the AM detection unit 12 not only generates the foregoing AM detection signal but also performs full-wave rectification on the digital data supplied from the A/D conversion unit 10 for AM detection. The AM detection unit 12 thus outputs data which indicates field intensity for use in detecting the presence or absence of sending stations or the like.

Incidentally, the data indicating field intensity, generated through the full-wave rectification and AM detection, is linear data. In consideration of the dynamic range and other factors of this FM/AM receiver, the linear data is hard to process as-is. For this reason, the logarithmic transformer of this practical example is provided to logarithmically transform the data indicating field intensity before processing.

Next, the circuit configuration of the logarithmic transformer in this practical example will be described in detail with reference to Figs. 6 and 7.

This logarithmic transformer is configured to transform 16-bit (n = 16) transform linear data (hereinafter, referred to as "input data") B indicating field intensity into 8-bit (m = 8) logarithmic transformation data D. The circuits shown in Fig. 6 constitute the logarithmic transformation upper bit string generating unit 3 shown in Fig. 2. The circuits shown in Fig. 7 constitute the logarithmic transformation lower bit string generating unit 4 shown in Fig. 2.

In Fig. 6, the logarithmic transformation upper bit string generating unit 3 comprises 15 OR gates U₁₄-U₀, 15 AND gates G₁₄-G₀, and a multiplexer 13.

The multiplexer 13 has a data input port consisting of 17 input terminals which are designated by the symbols d in the diagram, and a switching control port consisting of 17 control terminals which are designated by the symbols e in the diagram. The multiplexer 13 also comprises an output port for parallel-outputting 3-bit binary data which is designated by the symbols d₆, d₅, and d₄ in the diagram.

As shown in the diagram, the input terminals d of the data input port are respectively given 3-bit binary data (0, 0, 0) to (1, 1, 1) corresponding to decimal values of "0" to "7" in advance.

More specifically, the input terminal d lying at the top in the diagram (the counterpart of the control terminal e to which a decode bit g₁₅ to be described later is applied) is given binary data (1, 1, 1). The next input terminal d is given binary data (1, 1, 0), and the next input terminal d binary data (1, 0, 1). The rest of the input terminals d are also previously given predetermined binary data out of the 3-bit binary data (0, 0, 0) to (1, 1, 1).

The individual logic values "1" and "0" in the 3-bit binary data (0, 0, 0) to (1, 1, 1) are set by means of a simple circuit configuration of connecting pull-up resistors and pull-down

resistors to a so-called power supply terminal and ground terminal.

The foregoing control terminals e are individually supplied with decode bits g₁₅-g₀ and h₀ to be described later, respectively.

In the diagram, a single input terminal d and a single control terminal e shown adjoining each other constitute each single pair. When a decode bit of logic "1" is applied to the control terminal e in each pair, the above-mentioned binary data applied to the input terminal d which is paired with the control terminal e is output from the output port as output data (d₆, d₅, d₄).

That is, as will be detailed later, when any one of the decode bits g₁₅-g₀ and h₀ applied to the respective control terminals e becomes logic "1," the multiplexer 13 performs multiplexing so that the binary data applied to the input terminal d paired with the control terminal e of logic "1" makes the output data (d₆, d₅, d₄).

The OR gates U₁₄-U₀ and the AND gates G₁₄-G₀ are wired in predetermined combinations to decode the 16-bit input data B (b₁₅, b₁₄, ..., b₁, b₀), or the most significant bit (MSB) b₁₅ to the least significant bit (LSB) b₀, into 16-bit decode data G (g₁₅, g₁₄, ..., g₁, g₀) and decode the single decode bit h₀. The resultant is output to the foregoing 17 control terminals e in parallel.

Note that the most significant decode bit g₁₅ of the decode data G is not associated with any of the foregoing OR gates and AND gates. The most significant bit b₁₅ of the input data B is then supplied as-is to the highest-order control terminal e of the multiplexer 13.

The AND gates G₁₄-G₀ are of two input type, each having an input terminal of inverted logic and the other input terminal of non-inverted logic. The OR gates U₁₄-U₀ are of two input type each. The OR gates U₁₄-U₀ and the AND gates G₁₄-G₀ are arranged in accordance with the respective bits b_{15,} b₁₄, ..., b_{1,} and b₀ of the input data B.

As shown in the diagram, the OR gates U₁₄-U₀ are cascaded from the higher order to the lower, so as to perform OR operations between the outputs of the respective OR gates of higher order and predetermined bits of the input data B (b₁₅, b₁₄, ..., b₁, b₀) . The outputs u₁₄-u₁ of the OR gates U₁₄₋U₁ are supplied to the logic-inverted input terminals of the AND gates G₁₃-G₀, respectively. The decode bits g₁₄-g₀ to be output from the AND gates G₁₄-G₀ are wired to predetermined control terminals e of the multiplexer 13.

Then, the 3-bit bit string (d₆, d₅, d₄) output from the output port of the multiplexer 13 accompanied with the output u₈ of the OR gate U₈ as the most significant bit d₇, or a bit string (d₇, d₆, d₅, d₄) having a total of four bits, is output as the logarithmic transformation upper bit string D_{UP} mentioned above.

Next, the operation of the logarithmic transformation upper bit string generating unit 3 having such configuration will be described.

Initially, description will be given of the operation of the OR gates U₁₄-U₀. The OR gates U₁₄-U₀ operate so that the OR gate corresponding to a highest order bit of logic "1," out of the bits b₁₅-b₀ of the input data B, and the OR gates of order lower than the OR gate all output logic "1."

For example, when the output data B (b₁₅, ..., b₀) has the foregoing bit string of (0, 0, 0, 1, 0, 1, 1, 0, 1, 0, 0, 0, 0, 0, 0, 1), the OR gate U₁₂ corresponding to the highest order bit b₁₂ of logic "1" is given a value of logic "1." Moreover, since the OR gates U₁₁-U₀ of order lower than the OR gate U₁₂ are cascaded, these OR gates U₁₁-U₀ are also given a value of logic "1."

As a result, the outputs u₁₂-u₁ and h₀ of the OR gates U₁₂-U₀ all become logic "1" while the outputs u₁₄ and u₁₃ of the remaining OR gates U₁₄ and U₁₃ logic "0."

As above, the OR gates U₁₄-U₀ detect a highest order bit of logic "1" out of the bits b₁₅-b₀ of the input data B and set all the outputs of the OR gates corresponding to the bit of logic "1" and lying below the bit to logic "1," thereby outputting the aforementioned candidate for the active bit.

Next, description will be given of the operation of the AND gates G₁₄-G₀.

As shown in the diagram, the AND gate G₁₄ performs an AND operation between the bits b₁₅ and b₁₄. The AND gates G₁₃-G₀ perform AND operations between the outputs u₁₄-u₁ from the OR gates U₁₄-U₁ and the bits b₁₃-b₀, respectively. Then, the result of detection indicating the true active bit (that is, a single active bit) and its bit number S is output based on the decode bit g₁₅ and the outputs (decode bits) g₁₄-g₀ of these AND gates G₁₄-G₀.

That is, when the most significant bit b₁₅ of the input data B is of logic "1, " the decode bit g₁₅ becomes logic "1" and the decode bit g₁₄ output from the AND gate G₁₄ becomes logic "0."

The output u₁₄ of the OR gate U₁₄ becomes logic "1" due to the logic "1" of the bit b₁₅. The outputs u₁₃-u₁ of the remaining OR gates U₁₃-U₁ also become logic "1." Then, the outputs u₁₄-u₁ each having logic "1" are applied to the logic-inverted input terminals of the AND gates G₁₃-G₀. As a result, the AND gates G₁₃-G₀ output the decode bits g₁₃-g₀ of logic "0" each.

After such logic operations by the OR gates U₁₄-U₁ and the AND gates G₁₄-G₀, only the bit g₁₅ out of the decode bits g₁₅-g₀ shows logic "1" and all the other bits g₁₄-g₀ logic "0." The foregoing true active bit b₁₅ and its bit number S (i.e., 15) are detected and identified thus.

When the fifteenth bit b₁₅ of the input data B is of logic "0" and the fourteenth bit b₁₄ logic "1," the decode bit g₁₅ becomes logic "0" and the decode bit g₁₄ output from the AND gate G₁₄ becomes logic "1."

Since all the outputs u₁₄-u₁ of the OR gates U₁₄-U₁ become logic "1," the decode bits g₁₃-g₀ of the AND gates G₁₃-G₀ all become logic "1."

Consequently, when the fourteenth bit b₁₄ of the input data B is the highest order bit of logic "1," only the bit g₁₄ out of the decode bits g₁₅-g₀ becomes logic "1." With the fourteenth bit b₁₄ as the true active bit, the bit number S (i.e., 14) is then detected and identified.

When the fifteenth bit b₁₅ and the fourteenth bit b₁₄ of the input data B both are of logic "0" and the thirteenth bit b₁₃ logic "1," the decode bits g₁₅ and g₁₄ both become logic "0."

Since the output u₁₄ of the OR gate U₁₄ becomes logic "0" and the thirteenth bit b₁₃ is of logic "1," the decode bit g₁₃ of the AND gate G₁₃ becomes logic "1."

Then, all the outputs u₁₃-u₁ of the OR gates U₁₃-U₁ become logic "1, " so that the decode bits g₁₂-g₀ of the AND gates G₁₂-G₀ all become logic "0."

Consequently, when the thirteenth bit b₁₃ of the input data B is the highest order bit of logic "1," only the bit g₁₃ out of the decode bits g₁₅-g₀ becomes logic "1." With the thirteenth bit b₁₃ as the true active bit, the bit number S (i.e., 13) is then detected and identified.

Subsequently, the same logic operation processing follows with the result that only one of the decode bits g₁₅-g₀ becomes logic "1." The bit of the input data B corresponding to the decode bit of logic "1" can thus be detected as the active bit, allowing unique identification of the bit number S.

Next, description will be given of the operation of the multiplexer 13. As described previously, the multiplexer 13 outputs the binary data of an input terminal d which corresponds to the control terminal e to which logic "1" is applied, out of the 17 control terminals e, as a bit string (d₆, d₅, d₄) from its output port.

Thus, when only a single decode bit out of the decode bits g₁₅-g₀ becomes logic "1," the binary data of the input terminal d which corresponds to the control terminal e to which the logic "1" is applied is output as the bit string (d₆, d₅, d₄).

Consequently, the bit string (d₆, d₅, d₄) output corresponds to the active bit of the input data B.

Here, the input terminals d are given binary data corresponding to respective bit numbers S in advance. The binary data equivalent to the bit number S of the active bit represented by the decode bits g₁₅-g₀ is thus output as the bit string (d₆, d₅, d₄) .

For example, when the input data B(b₁₅, ..., b₀) has the foregoing bit string (0, 0, 0, 1, 0, 1, 1, 0, 1, 0, 0, 0, 0, 0, 0, 1), only the bit g₁₂ out of the decode bits g₁₅-g₀ in Fig. 6 becomes logic "1." Since the binary data of the input terminal d corresponding to the control terminal e to which the bit g₁₂ is applied is (1, 0, 0), the binary data (1, 0, 0) is output as the bit string (d₆, d₅, d₄).

Besides, a bit string (d₇, d₆, d₅, d₄) having a total of four bits, including the output u₈ of the OR gate U₈ as the most significant bit d₇, is output as the logarithmic transformation upper bit string D_{UP} (d₇, d₆, d₅, d₄), or D_{UP}(1, 1, 0, 0).

Here, if the bit string (b₁₅-b₇) , or the fifteenth to seventh bits of the input data B, contains any bit of logic "1," the output u₈ of the OR gate U₈ always becomes logic "1." The bit d₇ of the logarithmic transformation upper bit string D_{UP} (d₇, d_{6,} d₅, d₄) then becomes logic "1."

When all the bits in the bit string (b₁₅-b₇) , or the fifteenth to seventh bits of the input data B, are of logic "0," the output u₈ of the OR gate U₈ always becomes logic "0." The bit d₇ of the logarithmic transformation upper bit string D_{UP} (d₇, d₆, d₅, d₄) then becomes logic "0."

As above, the bit d₇ of the logarithmic transformation upper bit string D_{UP} (d₇, d₆, d₅, d₄) is set at either logic "1" or "0" depending on whether any one of the bits of the bit string (b₁₅-b₇), or the fifteenth to seventh bits of the input data B, is of logic "1" or all the bits are of logic "0." This allows the generation of the logarithmic transformation upper bit string D_{UP} equivalent to the bit number S of the active bit.

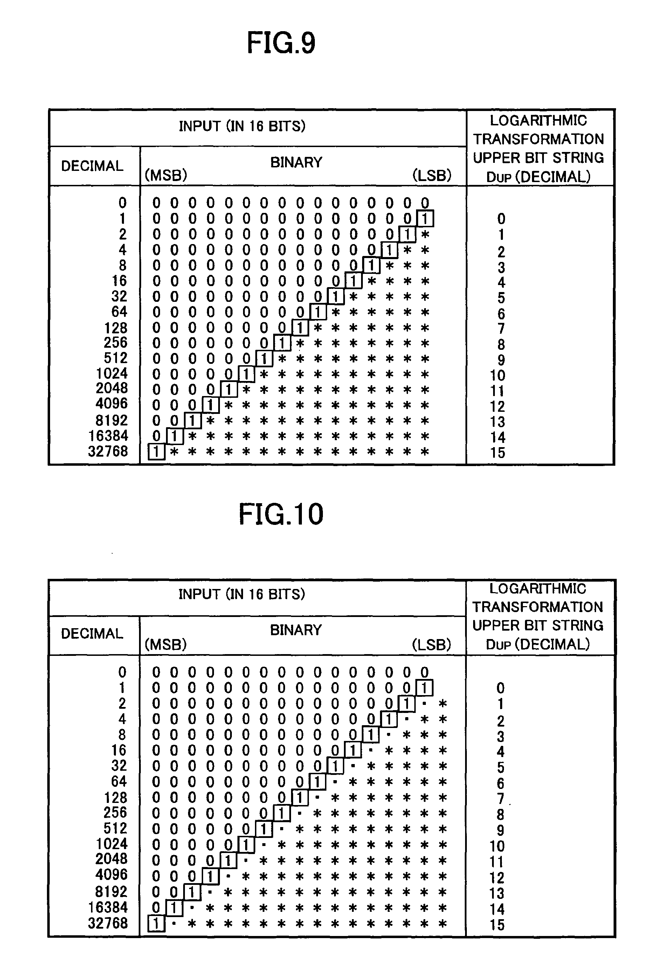

Figs. 8 and 9 are charts showing the above-described operation of the logarithmic transformation upper bit string generating unit 3 in the form of truth tables. Due to space limitation, the shown outputs of the logarithmic transformation upper bit string D_{UP} are for typical values of the input data B. The input data B is shown both in decimal and in binary. The values of the logarithmic transformation upper bit string D_{UP} are in decimal.

As shown in Fig. 8, when various values of the input data B are input, logarithmic transformation upper bit strings D_{UP} are output, the strings Dup being equivalent to the bit numbers S of respective highest order bits of logic "1" (active bits) in the bits of the input data B. As shown in the diagram, the output values of the logarithmic transformation upper bit strings D_{UP} in decimal expression thus indicate the integral values of the respective logarithmic transformations of the input data B.

More specifically, in Fig. 9, the bit numbers S of the active bits shown boxed are logarithmically transformed with the bits of order lower than the active bits (represented by the symbol "*") as don't-care. The integral parts of the resultant logarithms are output as the logarithmic transformation upper bit strings D_{UP}.

Next, with reference to Fig. 7, description will be given of the configuration of the logarithmic transformation lower bit string generating unit 4 in this practical example.

This logarithmic transformation lower bit string generating unit 4 comprises a plurality of AND gates X₁₅-X₁, an OR gate X₀, and a multiplexer 14.

Here, the multiplexer 14 has a configuration similar to that of the multiplexer 13 shown in Fig. 13, having a data input port consisting of 16 input terminals d and a switching control port consisting of 16 control terminals e to be paired with the respective input terminals d. The multiplexer 14 also has an output port for outputting 4-bit (m=4) logarithmic transformation lower bit string D_{LOW} (d₃, d₂, d₁, d₀) to be described later.

When one of the 16 control terminals e is set to logic "1," the 4-bit binary data applied to the input terminal d to be paired with the control terminal is output as the logarithmic transformation lower bit string D_{LOW} (d₃, d₂, d₁, d₀) .

As shown in the diagram, the highest-order control terminal e of the multiplexer 14 and the output of the AND gate X₁₅ are connected to each other. The next control terminal e and the output of the AND gate X₁₄ are connected to each other. The next control terminal e and the output of the AND gate X₁₃ are connected to each other. Similarly, the rest of the control terminals e and the outputs of the AND gates X₁₂-X₁ are successively connected to each other in one-on-one correspondence. The lowest-order control terminal e is connected with the output of the OR gate X₀.

Moreover, the input terminals d arranged in association with the foregoing 16 control terminals e from the highest order to the lowest, respectively, are supplied with the bits b₁₄, b₁₃, ..., b₁, b₀ of the input data B (b₁₅, b₁₄, ..., b₁, b₀), each with four bits shiftingly assigned.

More specifically, the highest input terminal d paired with the control terminal e which is connected to the AND gate X₁₅ receives a bit string (b₁₄, b₁₃, b₁₂, b₁₁) in parallel. The input terminal d paired with the control terminal e which is connected to the AND gate X₁₄ receives a bit string (b₁₃, b₁₂, b_{11,} b₁₀) in parallel. The input terminal d paired with the control terminal e which is connected to the AND gate X₁₃ receives a bit string (b₁₂, b₁₁, b₁₀, b₉) in parallel. Similarly, the rest of the input terminals d successively receive specific four bits of the input data B in parallel.

Note that when it is thus shiftingly assigned in units of four bits, the input data B will run out of bits to assign. Then, bits of logic "0" are added to the shortfall so that the input terminals d are all supplied with four bits of binary data.

That is, the lowest-order input terminal d (input terminal paired with the control terminal e which is connected to the OR gate X₀) of the multiplexer 14 is given binary data (0, 0, 0, 0). The next higher input terminal d is given binary data (b₀, 0, 0, 0). The next higher two input terminals d are given binary data (b₁, b₀, 0, 0) and (b₂, b₁, b₀, 0), respectively.

The additional bits of logic "0" are set by means of a simple circuit configuration of connecting pull-down resistors to a so-called ground terminal.

The AND gates X₁₅-X₁ are of four input type, and are wired to input the logarithmic transformation upper bit string D_{UP} (d₇, d₆, d₅, d₄) .

As shown in the diagram, predetermined input terminals out of the respective four input terminals of the AND gates X₁₅-X₁ are of inverted logic.

The AND gates X₁₅-X₁ thus detect the binary value of the logarithmic transformation upper bit string D_{UP} (d₇, d₆, d₅, d₄) , thereby detecting the bit number S of the active bit described above.

Take a concrete example. When the foregoing input data B (0, 0, 0, 1, 0, 1, 1, 0, 1, 0, 0, 0, 0, 0, 0, 1) is input and D_{UP} (1, 1, 0, 0) is input as the logarithmic transformation upper bit string D_{UP} (d₇, d₆, d₅, d₄) , the output of the AND gate X₁₂ alone becomes logic "1" while the outputs of the other AND gates X₁₅-X₁₃ and X₁₁-X₁ all become logic "0."

Thus, by means of the AND gates X₁₅-X₁, the twelfth bit b₁₂ corresponding to the logarithmic transformation upper bit string Dup (1, 1, 0, 0) is detected as the active bit. The output of the AND gate X₁₂, having logic "1," is supplied to the predetermined control terminal e of the multiplexer 14.

The input terminal d corresponding to the control terminal e which is connected to the AND gate X₁₂ is given the binary data of the bit string (b₁₁-b₈), or the eleventh to eighth bits of the input data B. A bit string (0, 1, 1, 0) out of the foregoing input data B (0, 0, 0, 1, 0, 1, 1, 0, 1, 0, 0, 0, 0, 0, 0, 1) is thus output from the multiplexer 14 as the logarithmic transformation lower bit string D_{LOW} (d₃, d₂, d₁, d₀).

As above, the AND gates X₁₅-X₁ detect the bit number S of the active bit represented by the logarithmic transformation upper bit string D_{UP} (d₇, d₆, d₅, d₄) , and make the multiplexer 14 output the data of the string of four bits lower than the bit number S out of the bit string of the input data B.

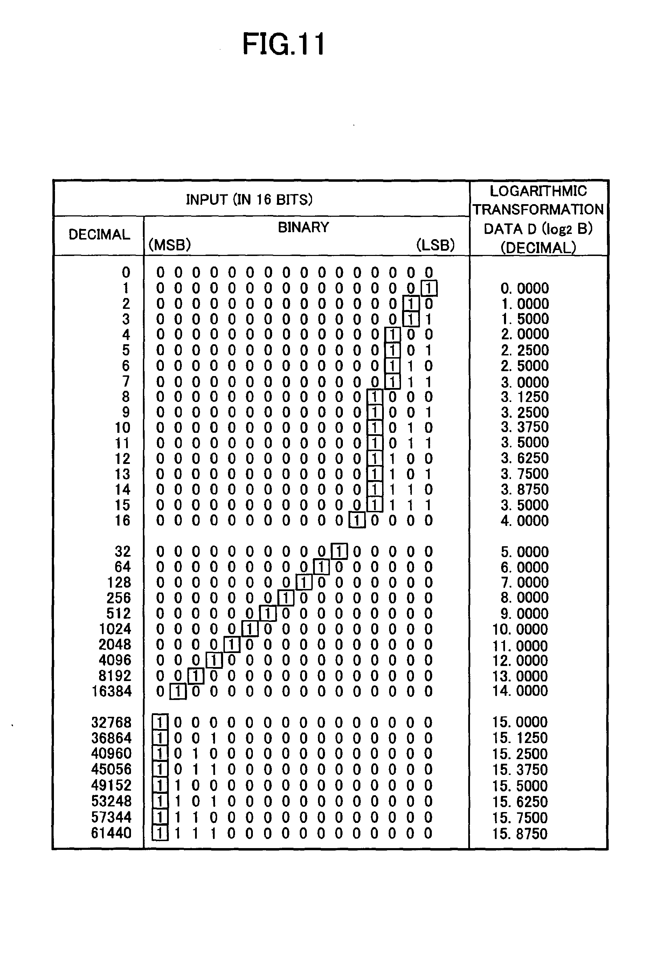

Next, the operation of the logarithmic transformation lower bit string generating unit 4 will be described with reference to Figs. 10 and 11. Figs. 10 and 11 are charts showing the operation in the form of truth tables. The input data B is shown in decimal and in binary. The values of the logarithmic transformation data D generated finally are shown in decimal.

Initially, in Fig. 9, the logarithmic transformation upper bit string generating unit 3 generates a logarithmic transformation upper bit string D_{UP} based on the active bit, shown boxed in the diagram, out of the bits of the input data B.

Meanwhile, the logarithmic transformation lower bit string generating unit 4 transforms four bits of order lower than the active bit, out of those indicated by the symbol "*" in Fig. 9, into a logarithmic transformation lower bit string D_{LOW} which shows the value of the fractional part.

Here, as shown in Fig. 10, the bit strings indicated by the symbol "^{*}" in Fig. 9 shall be shifted together to lower order by one bit, assuming that decimal points lie in the positions indicated by the symbol " · ". Then, logarithmic transformation data D is generated with the logarithmic transformation upper bit string D_{UP} and the logarithmic transformation lower bit string D_{LOW}, which express the integral part of the logarithmic transformation value and the fractional part of the logarithmic transformation value, respectively, with the symbol " · " as the boundary therebetween.

The logarithmic transformation lower bit string generating unit 4 uses the circuits shown in Fig. 7 to perform the processing of selecting and extracting the logarithmic transformation lower bit string D_{LOW}, which expresses the fractional part of the logarithmic transformation value, from the input data B. The logarithmic transformation lower bit string D_{LOW} is output as the bit string of lower order to follow the logarithmic transformation upper bit string D_{UP}.

That is, as shown in Fig. 11, the logarithmic transformation upper bit string D_{UP} generated based on a boxed active bit is followed by the logarithmic transformation lower bit string D_{LOW} which is the output of an intact string of four bits of order lower than the active bit.

Then, this logarithmic transformer outputs the m-bit binary data composed of the logarithmic transformation upper bit string D_{UP} and the logarithmic transformation lower bit string D_{LOW} as the logarithmic transformation data D.

Consequently, the logarithmic transformation data D shows the result of logarithmic transformation in the form of the sum of an integral value and a fractional value as shown in decimal in Fig. 11. Since the fractional value is added to the integral value of insufficient accuracy, it is possible to generate logarithmic transformation data D of higher accuracy.

Fig. 12 is a chart for showing the accuracy of transformation of the logarithmic transformer in this practical example. The shown evaluation is for the case where 16-bit input data B is logarithmically transformed into 8-bit logarithmic transformation data D.

As can be seen from the chart, the comparison between the theoretical values of logarithmic outputs for respective values of the input data B ranging from "0" to "65535" in decimal and the actual values of the logarithmic transformation data D determined by this logarithmic transformer showed extremely high closeness therebetween. This demonstrated extremely high accuracy of the logarithmic transformation.

As has been described, according to the present embodiment, the practical example, and the modified examples thereof, logarithmic transformation can be performed by fewer logic operation elements. It is therefore possible to achieve a significant reduction in circuit scale and the like. The processing time necessary for the logarithmic transformation can also be reduced greatly. Besides, high logarithmic transformation accuracy can be obtained as shown in Fig. 12.

It is thus possible to provide a logarithmic transformer of new configuration which satisfies the requirements of the logarithmic transformer. Useful effects can be provided for wide fields of digital signal processing, including digital communications equipment and digital television sets which are under research and development with the progress of multimedia.

Incidentally, as has been described with reference to Figs. 2, 4, 7, 9, 10, and 11, in the present embodiment, the practical example, and the modified examples thereof, the binary data string (logarithmic transformation lower bit string) D_{LOW} for expressing the fractional part of a logarithmic transformation value is extracted from a bit string of order lower than the active bit in the input data B. The resultant is then combined with the logarithmic transformation upper bit string D_{UP} to finally generate the logarithmic transformation data D.

Here, the processing of extraction from a bit string of order lower than the active bit in the input data B is performed only once before the resultant is simply combined with the logarithmic transformation upper bit string D_{UP} to generate the logarithmic transformation data D. This allows a significant reduction in the time necessary for the logarithmic transformation processing.

For a further improvement to the logarithmic transformation accuracy, however, the following processing may also be performed.

That is, a highest order bit of logic "1" similar to the one described above is detected from the entire remaining bit string of order lower than the active bit in the input data B, not a bit string of order lower than the active bit, i.e., a string of predetermined q (q = 4) bits. More specifically, an active bit (hereinafter, referred to as "fractional active bit") is detected from the bit string which expresses the fractional part of the logarithm, indicated by the symbol "*" in Figs. 9 and 10.

Then, the logarithmic transformation lower bit string D_{Low} which expresses the fractional part of the logarithm is generated from the binary data corresponding to the position of the fractional active bit (binary data expressing the fractional value) and the remaining bit string of order lower than the fractional active bit.

This makes it possible to generate logarithmic transformation data D which precisely expresses the fractional part of the logarithm even if the number of bits of the binary data for expressing the fractional part of the logarithm needs to be reduced in order to satisfy general requirements in generating logarithmic transformation data D in a limited number of bits m. In other words, it is possible to improve the resolution of the fractional logarithm with a smaller number of bits. This in turn allows the generation of logarithmic transformation data D corresponding to input data B with high accuracy.

In addition, such processing of detecting a fractional active bit may be repeated a plurality of times (two or more times) . The double or multiple processing can further improve the resolution of the fractional logarithm, allowing logarithmic transmission data Dm of higher accuracy.

The embodiment and the practical example have dealt mainly with a logarithmic transformer which is configured as hardware. Nevertheless, the logarithmic transformer may be a computer program for logarithmic transformation which is run on an electronic apparatus comprising a computer (CPU) or the like capable of digital processing.

More specifically, a computer program having the function equivalent to that of the logarithmic transformer described in the embodiment and the practical example can be created and run on an electronic apparatus such as a personal computer (PC), to achieve a significant reduction in the processing time required for logarithmic transformation with high logarithmic transformation accuracy etc.

## Claims

1. A logarithmic transformer comprising:
a first bit string generating means (3) for generating a first bit string of binary data indicating the position of a highest order bit of logic "1" out of bits of digital data to be logarithmically transformed; and
a second bit string generating means (4) for determining, from said digital data, a second bit string of order lower than said highest order bit of logic "1",
the logarithmic transformer outputting logarithmic transformation data, which includes said first bit string as an integral part of a logarithmic transformation value resulting from a logarithmic transformation of said digital data and said second bit string as a fractional part of said logarithmic transformation value.

2. The logarithmic transformer according to claim 1, wherein said first bit string generating means (3) comprises:
a detecting unit (3a) for detecting the position of said highest order bit of logic "1" out of the bits of said digital data; and
a generating unit (3b) for generating said first bit string based on a result of detection by said detecting unit (3a).

3. The logarithmic transformer according to claim 2, wherein
said detecting unit (3a) detects said highest order bit of logic "1" by decoding said digital data.

4. The logarithmic transformer according to claim 2 or 3, wherein
said generating unit (3b) contains pieces of binary data indicating the positions of the respective bits of said digital data, and selects one out of said pieces of binary data based on the result of detection by said detecting unit, thereby generating said binary data indicating the position of said highest order bit of logic "1."

5. The logarithmic transformer according to claim 4, wherein said generating unit (3b) is composed of a switching circuit for selecting one out of said pieces of binary data, based on the result of detection by said detecting unit.

6. The logarithmic transformer according to any one of claims 2 - 5, wherein said detecting unit (3a) comprises:
a first logic circuit for outputting data for excluding a bit string lower than said highest order bit of logic "1" from the bits of said digital data; and
a second logic circuit for removing the bit string excluded by said data from the bits of said digital data, thereby detecting said highest order bit of logic "1."

7. The logarithmic transformer according to claim 6, wherein:
said first logic circuit includes a plurality of OR gates for inputting respective bits of said digital data from a most significant bit to a least significant bit, said OR gates having their outputs and inputs cascaded in association with the most significant bit to the least significant bit; and
said OR gates generate said data for excluding by performing OR operations between the outputs of said OR gates of higher order bits and the respective bits of said digital data.

8. The logarithmic transformer according to claim 6 or 7, wherein
said second logic circuit detects said highest order bit of logic "1" by performing AND operations between the respective bits of said digital data and said data for excluding.

9. The logarithmic transformer according to any one of claims 1 - 8, wherein
said second bit string generating means (4) determines, as said second bit string, a bit string of a predetermined number of bits including a bit following said highest order bit of logic "1" out of the bits of said digital data.

10. The logarithmic transformer according to claim 9, wherein
when the number of bits from the bit following said highest order bit to a least significant bit of said digital data falls short of said predetermined number, said second bit string generating means (4) appends as many bits as a shortfall to the least significant bit to generate, as said second bit string, a bit string of said predetermined number of bits.

11. The logarithmic transformer according to claim 9 or 10, wherein said second bit string generating means (4) comprises:
a second bit string extracting unit (4b) for inputting said digital data as successive bit strings each having said predetermined number of bits; and
a second bit string selecting unit (4a) for making said second bit string extracting unit to extract, as said second bit string, a bit string of said predetermined number of bits having the bit following said highest order bit of logic "1" as a most significant bit of said bit string of said predetermined number.

12. The logarithmic transformer according to claim 11, wherein
said second bit string selecting unit (4a) detects said highest order bit of logic "1" by decoding said digital data.

13. The logarithmic transformer according to claim 12, wherein
said second bit string extracting unit (4b) extracts the bit string of said predetermined number of bits including the bit following said highest order bit as the most significant bit, based on the result of detection decoded by said second bit string selecting unit (4a).

14. The logarithmic transformer according to any one of claims 11 - 13, wherein said second bit string extracting unit (4b) is composed of a switching circuit for extracting the bit string of said predetermined number of bits based on the result of detection by said second bit string selecting unit (4a).

15. A method of logarithmic transformation comprising:
a first bit string generating step of generating a first bit string of binary data indicating the position of a highest order bit of logic "1" out of bits of digital data to be logarithmically transformed; and
a second bit string generating step of determining, from said digital data, a second bit string of order lower than said highest order bit of logic "1",
wherein logarithmic transformation data on said digital data is generated by using said first bit string as an integral part of a logarithmic transformation value resulting from a logarithmic transformation of said digital data and said second bit string as a fractional part of said logarithmic transformation value.
